(19) Europäisches Patentamt
European Patent Office
Office européen des brevets

(11) EP 4 254 583 A1

(12) **EUROPEAN PATENT APPLICATION**
published in accordance with Art. 153(4) EPC

(43) Date of publication:
**04.10.2023 Bulletin 2023/40**

(21) Application number: **22845999.6**

(22) Date of filing: **30.03.2022**

(51) International Patent Classification (IPC):
***H01M 10/0567*** *(2010.01)* ***H01M 10/052*** *(2010.01)*

(52) Cooperative Patent Classification (CPC):
**H01M 10/052; H01M 10/0567;** Y02E 60/10

(86) International application number:
**PCT/KR2022/004547**

(87) International publication number:
**WO 2023/003127 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.07.2021 KR 20210096463**

(71) Applicant: **Samsung SDI Co., Ltd.**
**Yongin-si, Gyeonggi-do 17084 (KR)**

(72) Inventors:
- **KIM, Minseo**
  **Yongin-si, Gyeonggi-do 17084 (KR)**
- **LEE, Tae Jin**
  **Yongin-si, Gyeonggi-do 17084 (KR)**
- **KIM, Sanghyung**
  **Yongin-si, Gyeonggi-do 17084 (KR)**
- **WOO, Myungheui**
  **Yongin-si, Gyeonggi-do 17084 (KR)**
- **PARK, Hyejin**
  **Yongin-si, Gyeonggi-do 17084 (KR)**
- **KIM, Dahyun**
  **Yongin-si, Gyeonggi-do 17084 (KR)**
- **RYU, Bokyung**
  **Yongin-si, Gyeonggi-do 17084 (KR)**

(74) Representative: **Russell, Tim et al**
**Venner Shipley LLP**
**200 Aldersgate**
**London EC1A 4HD (GB)**

(54) **ELECTROLYTE FOR RECHARGEABLE LITHIUM BATTERY AND RECHARGEABLE LITHIUM BATTERY INCLUDING SAME**

(57) Provided are an electrolyte for a rechargeable lithium battery and a rechargeable lithium battery including the same, the electrolyte including a nonaqueous organic solvent, a lithium salt, and an additive, wherein the additive is a composition including a first compound and a second compound, the first compound is a cesium salt compound, and the second compound includes a composition including a second compound represented by Chemical Formula 1 or Chemical Formula 2.

Details of the Chemical Formula 1 and Chemical Formula 2 are as described in the specification.

【Figure 1】

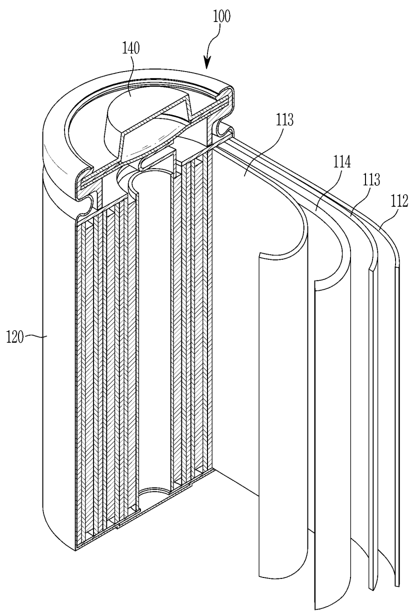


EP 4 254 583 A1

## Description

### [Technical Field]

This disclosure relates to an electrolyte for a rechargeable lithium battery and a rechargeable lithium battery including the same.

### [Background Art]

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

The electrolyte serves as a medium for moving lithium ions between the negative electrode and the positive electrode, and may generally include an organic solvent in which lithium salt is dissolved, and this electrolyte is important in determining stability and performance of a rechargeable lithium battery.

The electrolyte may universally include, for example, a mixed solvent of high dielectric cyclic carbonates such as propylene carbonate and ethylene carbonate and chain carbonates such as diethyl carbonate, ethyl methyl carbonate and dimethyl carbonate in which a lithium salt such as $LiPF_6$, $LiBF_4$, or LiFSI is added. As the development of batteries in various fields is activated, the development of batteries having high output and high stability in a wide temperature range is becoming more important. In terms of the electrolyte, it is important to develop an optimal combination of an organic solvent and additives capable of providing high output, long cycle-life characteristics, high-temperature storage characteristics, and suppressing swelling, decrease in capacity, and increase in resistance.

### [Disclosure]

[Technical Problem]

An embodiment provides an electrolyte for a rechargeable lithium battery having excellent output characteristics, high-temperature characteristics, and safety.

Another embodiment provides a rechargeable lithium battery having improved high-temperature storage characteristics, cycle-life characteristics, and safety by applying the electrolyte.

[Technical Solution]

An embodiment of the present invention provides an electrolyte for a rechargeable lithium battery including a non-aqueous organic solvent, a lithium salt, and an additive, wherein the additive is a composition including a first compound and a second compound, the first compound is a cesium salt compound, and the second compound includes a second compound represented by Chemical Formula 1 or Chemical Formula 2.

[Chemical Formula 1]

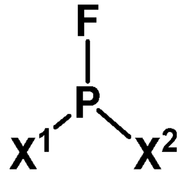

In Chemical Formula 1,

$X^1$ and $X^2$ are each independently a halogen or $-O-L^1-R^1$,

at least one of $X^1$ to $X^2$ is $-O-L^1-R^1$,
wherein $L^1$ is a single bond or a substituted or unsubstituted C1 to C10 alkylene group, and
R's are each independently a cyano group (-CN), a difluorophosphite group ($-OPF_2$), a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and
when $X^1$ and $X^2$ are simultaneously $-O-L^1-R^1$,
R's are each independently present, or
two $R^1$s are linked to form a substituted or unsubstituted monocyclic or polycyclic aliphatic heterocycle or a substituted or unsubstituted monocyclic or polycyclic aromatic heterocycle; and

[Chemical Formula 2]

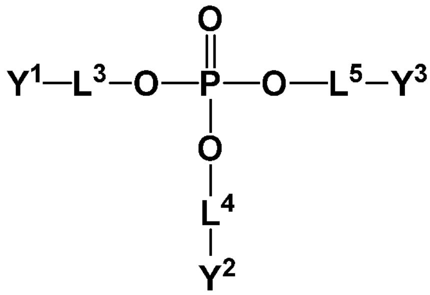

wherein in Chemical Formula 2,

$L^3$ to $L^5$ are each independently be a single bond, a substituted or unsubstituted C1 to C10 alkylene group or a substituted or unsubstituted C6 to C30 arylene group, and
$Y^1$ to $Y^3$ are each independently be a cyano group (-CN), a substituted or unsubstituted C6 to C30 aryl group or a substituted or unsubstituted C2 to C30 heterocyclic group.

An anion of the cesium salt compound may be an imide-based anion or a phosphate-based anion.
The cesium salt compound may be represented by Chemical Formula 3 or Chemical Formula 4.

[Chemical Formula 3] [Chemical Formula 4]

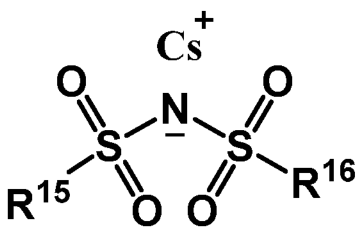

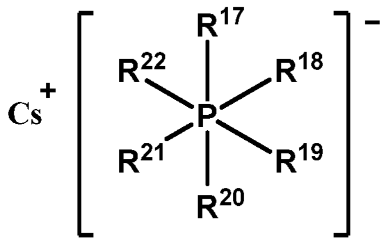

In Chemical Formula 3 and Chemical Formula 4,
$R^{15}$ to $R^{22}$ are each independently a fluoro group or a C1 to C4 fluoroalkyl group substituted with at least one fluoro group.
Chemical Formula 3 may be represented by Chemical Formula 3-1 or 3-2.

[Chemical Formula 3-1] [Chemical Formula 3-2]

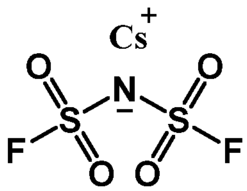
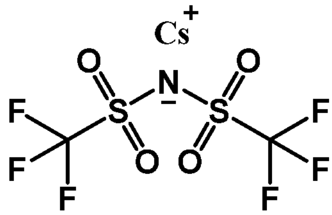

Chemical Formula 4 may be represented by Chemical Formula 4-1.

[Chemical Formula 4-1]

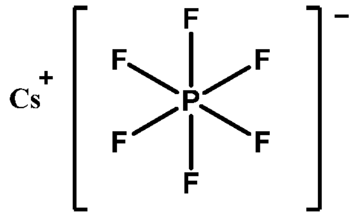

The first compound may be included in an amount of 0.05 to 3.0 parts by weight based on 100 parts by weight of the electrolyte for the rechargeable lithium battery.

One of $X^1$ and $X^2$ in Chemical Formula 1 may be a fluoro group, and the other is $-O-L^1-R^1$,

wherein $L^1$ is a single bond or a substituted or unsubstituted C1 to C10 alkylene group, and
$R^1$ is a cyano group (-CN) or a difluorophosphite group ($-OPF_2$).

The second compound is represented by Chemical Formula 1-1.

[Chemical Formula 1-1]

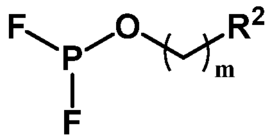

In Chemical Formula 1-1,

m is one of integers from 1 to 5, and
$R^2$ is a cyano group (-CN) or a difluorophosphite group ($-OPF_2$).
Each of $X^1$ and $X^2$ in Chemical Formula 1 may be $-O-L^1-R^1$,
two L's are each independently a single bond or a substituted or unsubstituted C1 to C10 alkylene group, and
two $R^1$s may each independently be a substituted or unsubstituted C1 to C10 alkyl group, or two R's may be linked to form a substituted or unsubstituted monocyclic aliphatic heterocycle or polycyclic aliphatic heterocycle.

The second compound may be represented by Chemical Formula 1-2.

[Chemical Formula 1-2]

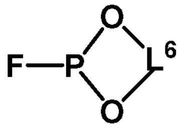

In Chemical Formula 1-2,
$L^6$ is a substituted or unsubstituted C2 to C5 alkylene group.

Chemical Formula 1-2 may be represented by Chemical Formula 1-2a or Chemical Formula 1-2b.

[Chemical Formula 1-2a] [Chemical Formula 1-2b]

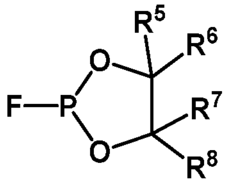 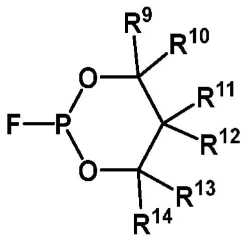

In Chemical Formula 1-2a and Chemical Formula 1-2b,
$R^5$ to $R^{14}$ are each independently hydrogen, a halogen group, or a substituted or unsubstituted C1 to C5 alkyl group.

$L^3$ to $L^5$ in Chemical Formula 2 may each independently be a single bond or a substituted or unsubstituted C1 to C10 alkylene group.

$Y^1$ to $Y^3$ in Chemical Formula 2 may each independently be a cyano group (-CN) or a substituted or unsubstituted C6 to C30 aryl group.

The second compound may be any one selected from compounds listed in Group 1.

[Group 1]

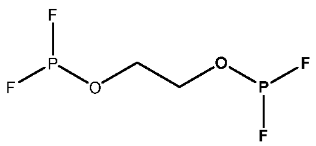
2-a

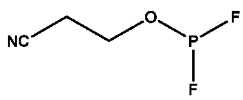
2-b

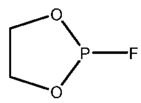
2-c

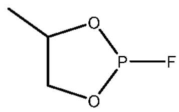
2-d

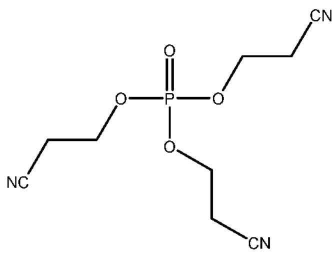
2-e

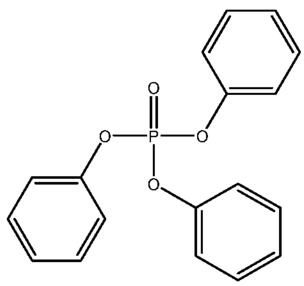
2-f

The second compound may be included in an amount of 0.1 to 5.0 parts by weight based on 100 parts by weight of the electrolyte for the rechargeable lithium battery.

The composition may include the first compound and the second compound in a weight ratio of 1:0.1 to 1:10.

The composition may include the first compound and the second compound in a weight ratio of 1:0.5 to 1:2.

The composition may be included in an amount of 0.2 to 8 parts by weight based on 100 parts by weight of the

electrolyte for the rechargeable lithium battery.

Another embodiment of the present invention provides a rechargeable lithium battery including a positive electrode including a positive electrode active material, a negative electrode including a negative electrode active material, and the aforementioned electrolyte for the rechargeable lithium battery.

The positive electrode active material may be represented by Chemical Formula 7.

[Chemical Formula 7] $Li_xM^1_yM^2_zM^3_{1-y-z}O_{2-a}X_a$

In Chemical Formula 7,

$0.5 \leq x \leq 1.8$, $0 \leq a \leq 0.05$, $0 < y \leq 1$, $0 \leq z \leq 1$, $0 \leq y+z \leq 1$, $M^1$, $M^2$, and $M^3$ each independently include at least one element selected from a metal such as Ni, Co, Mn, Al, B, Ba, Ca, Ce, Cr, Fe, Mo, Nb, Si, Sr, Mg, Ti, V, W, Zr, or La, and a combination thereof, and X include at least one element selected from F, S, P, or Cl.

In Chemical Formula 7, $0.8 \leq y \leq 1$, $0 \leq z \leq 0.2$, and $M^1$ may be Ni.

The negative electrode active material may be graphite or may include a Si composite and graphite together.

The negative electrode active material may be graphite or may include a Si composite and graphite together.

The Si-based particle may include one or more of a Si-C composite, $SiO_x$ ($0 < x \leq 2$), and a Si alloy.

The Si-C composite may include a core including Si particles and crystalline carbon and an amorphous carbon coating layer on the surface of the core, and

an average particle diameter of the Si particles may be 50 nm to 200 nm.

[Advantageous Effects]

By applying an additive with improved output characteristics, an increase in battery resistance during high-temperature storage may be suppressed, and a rechargeable lithium battery with improved cycle-life characteristics and safety may be implemented.

**[Description of the Drawings]**

FIG. 1 is a schematic view showing a rechargeable lithium battery according to an embodiment of the present invention.

<Description of Symbols>

100: rechargeable lithium battery
112: negative electrode
113: separator
114: positive electrode
120: battery case
140: sealing member

**[Mode for Invention]**

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

In the present specification, unless otherwise defined, "substituted" means that at least one hydrogen in a substituent or compound is deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In one example of the present invention, "substituted" refers to replacement of at least one hydrogen of a substituent or a compound by deuterium, a halogen, a C1 to C30

alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

In the present specification, unless otherwise defined, "hetero" refers to one including one to three heteroatoms selected from N, O, S, P, and Si, and remaining carbons in one functional group.

In the present specification, "aryl group" refers to a group including at least one hydrocarbon aromatic moiety, and all the elements of the hydrocarbon aromatic moiety have p-orbitals which form conjugation, for example a phenyl group, a naphthyl group, and the like, two or more hydrocarbon aromatic moieties may be linked by a sigma bond and may be, for example a biphenyl group, a terphenyl group, a quarterphenyl group, and the like, and two or more hydrocarbon aromatic moieties are fused directly or indirectly to provide a nonaromatic fused ring, for example a fluorenyl group.

The aryl group may include a monocyclic, polycyclic or fused ring polycyclic (i.e., rings sharing adjacent pairs of carbon atoms) functional group.

In the present specification, "heterocyclic group" is a generic concept of a heteroaryl group, and may include at least one hetero atom selected from N, O, S, P, and Si instead of carbon (C) in a cyclic compound such as aryl group, a cycloalkyl group, a fused ring thereof, or a combination thereof. When the heterocyclic group is a fused ring, the entire ring or each ring of the heterocyclic group may include one or more heteroatoms.

For example, a "heteroaryl group" may refer to an aryl group including at least one heteroatom selected from N, O, S, P, and Si. Two or more heteroaryl groups are linked by a sigma bond directly, or when the heteroaryl group includes two or more rings, the two or more rings may be fused. When the heteroaryl group is a fused ring, each ring may include one to three heteroatoms.

More specifically, the substituted or unsubstituted C6 to C30 aryl group may be a substituted or unsubstituted phenyl group, a substituted or unsubstituted naphthyl group, a substituted or unsubstituted anthracenyl group, a substituted or unsubstituted phenanthrenyl group, a substituted or unsubstituted naphthacenyl group, a substituted or unsubstituted pyrenyl group, a substituted or unsubstituted biphenyl group, a substituted or unsubstituted p-terphenyl group, a substituted or unsubstituted m-terphenyl group, a substituted or unsubstituted o-terphenyl group, a substituted or unsubstituted chrysenyl group, a substituted or unsubstituted triphenylene group, a substituted or unsubstituted perylenyl group, a substituted or unsubstituted fluorenyl group, a substituted or unsubstituted indenyl group, a substituted or unsubstituted furanyl group, or a combination thereof, but is not limited thereto.

More specifically, the substituted or unsubstituted C2 to C30 heterocyclic group may be a substituted or unsubstituted thiophenyl group, a substituted or unsubstituted pyrrolyl group, a substituted or unsubstituted pyrazolyl group, a substituted or unsubstituted imidazolyl group, a substituted or unsubstituted triazolyl group, a substituted or unsubstituted oxazolyl group, a substituted or unsubstituted thiazolyl group, a substituted or unsubstituted oxadiazolyl group, a substituted or unsubstituted thiadiazolyl group, a substituted or unsubstituted pyridyl group, a substituted or unsubstituted pyrimidinyl group, a substituted or unsubstituted pyrazinyl group, a substituted or unsubstituted triazinyl group, a substituted or unsubstituted benzofuranyl group, a substituted or unsubstituted benzothiophenyl group, a substituted or unsubstituted benzimidazolyl group, a substituted or unsubstituted indolyl group, a substituted or unsubstituted quinolinyl group, a substituted or unsubstituted isoquinolinyl group, a substituted or unsubstituted quinazolinyl group, a substituted or unsubstituted quinoxalinyl group, a substituted or unsubstituted naphthyridinyl group, a substituted or unsubstituted benzoxazinyl group, a substituted or unsubstituted benzthiazinyl group, a substituted or unsubstituted acridinyl group, a substituted or unsubstituted phenazinyl group, a substituted or unsubstituted phenothiazinyl group, a substituted or unsubstituted phenoxazinyl group, a substituted or unsubstituted carbazolyl group, a substituted or unsubstituted dibenzofuranyl group, or a substituted or unsubstituted dibenzothiophenyl group, or a combination thereof, but is not limited thereto.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114,

negative electrode 112, and separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to an embodiment of the present invention includes an electrolyte, a positive electrode, and a negative electrode.

The electrolyte includes non-aqueous organic solvent, a lithium salt and an additive, wherein the additive is a composition including a first compound and a second compound, the first compound is a cesium salt compound, and the second compound includes a second compound represented by Chemical Formula 1 or Chemical Formula 2.

[Chemical Formula 1]

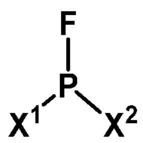

In Chemical Formula 1,

$X^1$ and $X^2$ are each independently a halogen or $-O-L^1-R^1$,
at least one of $X^1$ to $X^2$ is $-O-L^1-R^1$,
wherein $L^1$ is a single bond or a substituted or unsubstituted C1 to C10 alkylene group, and
R's are each independently a cyano group (-CN), a difluorophosphite group ($-OPF_2$), a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and
when $X^1$ and $X^2$ are simultaneously $-O-L^1-R^1$,
R's are each independently present, or
two $R^1$s are linked to form a substituted or unsubstituted monocyclic or polycyclic aliphatic heterocycle or a substituted or unsubstituted monocyclic or polycyclic aromatic heterocycle; and

[Chemical Formula 2]

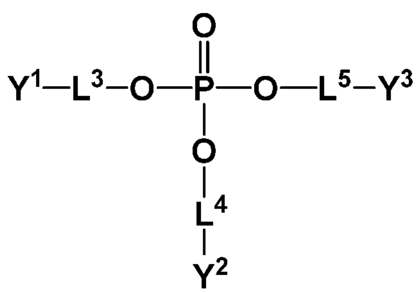

wherein, in Chemical Formula 2,

$L^3$ to $L^5$ are each independently be a single bond, a substituted or unsubstituted C1 to C10 alkylene group or a substituted or unsubstituted C6 to C30 arylene group, and
$Y^1$ to $Y^3$ are each independently be a cyano group (-CN), a substituted or unsubstituted C6 to C30 aryl group or a substituted or unsubstituted C2 to C30 heterocyclic group.

The first compound, which is a cesium salt compound, is decomposed in an electrolyte and forms a film on the surfaces of the positive and negative electrodes to effectively control elution of lithium ions from the positive electrode and thus prevent decomposition of the positive electrode. Specifically, the first compound is earlier reduced and decomposed than a carbonate-based solvent included in a non-aqueous organic solvent and forms an SEI (Solid Electrolyte Interface) on the negative electrode to prevent decomposition of the electrolyte and the resulting decomposition of the

electrode, resultantly suppressing an increase in internal resistance due to gas generation.

In addition, the second compound is a phosphate-based or phosphite-based compound and may suppress a resistance increase in the film due to the first compound and thus have an effect of improving output characteristics.

That is, by including the first compound and the second compound together, it is possible to implement a rechargeable lithium battery with improved cycle-life characteristics due to resistance increase suppression and output characteristics improvement.

For example, an anion of the cesium salt compound may be an imide-based anion or a phosphate-based anion.

As a specific example, the cesium salt compound may be represented by Chemical Formula 3 or Chemical Formula 4.

[Chemical Formula 3] [Chemical Formula 4]

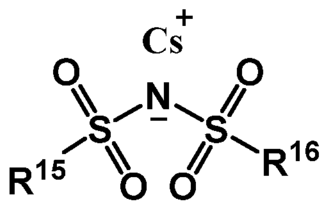

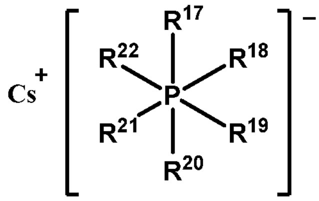

In Chemical Formula 3 and Chemical Formula 4,

$R^{15}$ to $R^{22}$ are each independently a fluoro group or a C1 to C4 fluoroalkyl group substituted with at least one fluoro group.

For example, $R^{15}$ to $R^{22}$ in Chemical Formulas 3 and 4 may each independently be a fluoro group or a C1 to C4 fluoroalkyl group substituted with at least two fluoro groups.

For example, $R^{15}$ to $R^{22}$ in Chemical Formulas 3 and 4 may each independently be a fluoro group or a C1 to C4 fluoroalkyl group substituted with at least three fluoro groups.

As a specific example, $R^{15}$ to $R^{22}$ in Chemical Formulas 3 and 4 may each independently be a fluoro group or a C1 to C3 fluoroalkyl group substituted with at least three fluoro groups.

As a more specific example, $R^{15}$ to $R^{22}$ in Chemical Formulas 3 and 4 may each independently be a fluoro group or a C1 to C2 fluoroalkyl group substituted with at least three fluoro groups.

For example, Chemical Formula 3 may be represented by Chemical Formula 3-1 or 3-2.

[Chemical Formula 3-1] [Chemical Formula 3-2]

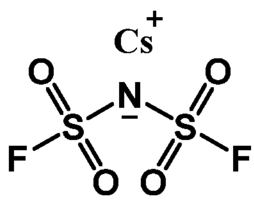

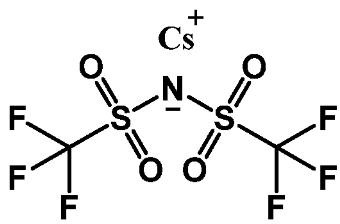

For example, Chemical Formula 4 may be represented by Chemical Formula 4-1.

[Chemical Formula 4-1]

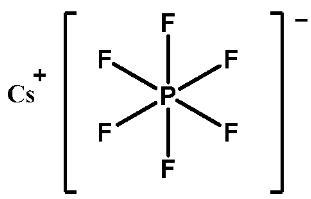

For example, the first compound may be included in an amount of 0.05 to 3.0 parts by weight, for example, 0.05 to 2.0 parts by weight, 0.1 to 2.0 parts by weight, or 0.1 to 1.0 parts by weight, based on 100 parts by weight of the electrolyte for the rechargeable lithium battery.

For example, one of $X^1$ and $X^2$ in Chemical Formula 1 may be a fluoro group, and the other is -O-$L^1$-$R^1$,

wherein $L^1$ may be a single bond or a substituted or unsubstituted C1 to C10 alkylene group, and
$R^1$ may be a cyano group (-CN) or a difluorophosphite group (-$OPF_2$).

As a specific example, the second compound may be represented by Chemical Formula 1-1.

[Chemical Formula 1-1]

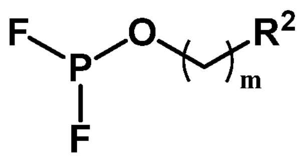

In Chemical Formula 1-1,

m is one of integers from 1 to 5, and
$R^2$ is a cyano group (-CN) or a difluorophosphite group (-$OPF_2$).
For example, each of $X^1$ and $X^2$ in Chemical Formula 1 are -O-$L^1$-$R^1$, and
two $L^1$s are each independently a single bond or a substituted or unsubstituted C1 to C10 alkylene group, and
two $R^1$s may each independently be a substituted or unsubstituted C1 to C10 alkyl group, or two R's may be linked to form a substituted or unsubstituted monocyclic aliphatic heterocycle or polycyclic aliphatic heterocycle.

As a specific example, the second compound may be represented by Chemical Formula 1-2.

[Chemical Formula 1-2]

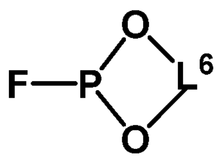

In Chemical Formula 1-2,
$L^6$ is a substituted or unsubstituted C2 to C5 alkylene group.
As a more specific example, Chemical Formula 1-2 may be represented by Chemical Formula 1-2a or Chemical Formula 1-2b.

[Chemical Formula 1-2a] [Chemical Formula 1-2b]

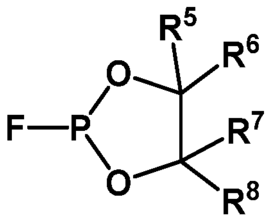

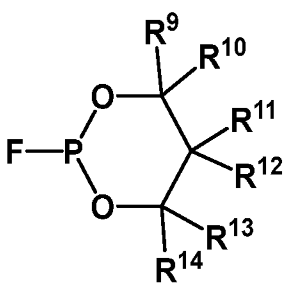

In Chemical Formula 1-2a and Chemical Formula 1-2b,
$R^5$ to $R^{14}$ are each independently hydrogen, a halogen group, or a substituted or unsubstituted C1 to C5 alkyl group.
For example, $L^3$ to $L^5$ in Chemical Formula 2 may each independently be a single bond or a substituted or unsubstituted C1 to C10 alkylene group.

For example, $Y^1$ to $Y^3$ in Chemical Formula 2 may each independently be a cyano group (-CN) or a substituted or unsubstituted C6 to C30 aryl group.

As a more specific example, $Y^1$ to $Y^3$ in Chemical Formula 2 may each independently be a cyano group (-CN) or a substituted or unsubstituted C6 to C20 aryl group.

For example, $Y^1$ to $Y^3$ in Chemical Formula 2 may each independently be a cyano group (-CN) or a substituted or unsubstituted C6 to C12 aryl group.

In an embodiment, $Y^1$ to $Y^3$ in Chemical Formula 2 may each independently be a cyano group (-CN) or a substituted or unsubstituted phenyl group.

For example, the second compound may be any one selected from the compounds listed in Group 1.

[Group 1]

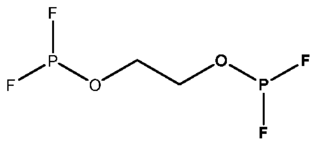
2-a

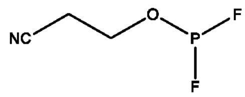
2-b

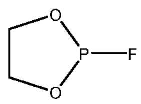
2-c

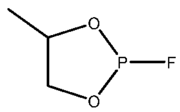
2-d

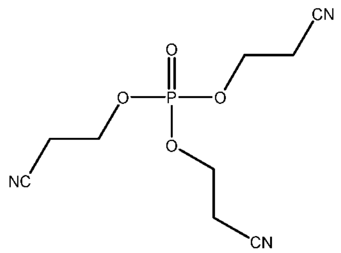
2-e

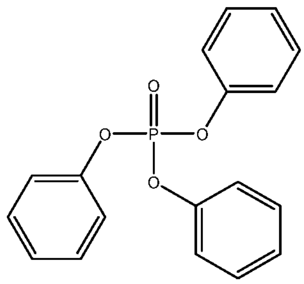
2-f

For example, the second compound may be included in an amount of 0.1 to 5.0 parts by weight, for example 0.3 to 5.0 parts by weight, 0.5 to 5.0 parts by weight, 0.5 to 4.0 parts by weight, 0.5 to 3.0 parts by weight, or 0.5 to 1.0 parts by weight based on 100 parts by weight of the electrolyte for the rechargeable lithium battery.

For example, the composition may include the first compound and the second compound in a weight ratio of 1:0.1 to 1:10.

As a specific example, the composition may include the first compound and the second compound in a weight ratio of 1:0.2 to 1:10, 1:0.3 to 1:10, 1:0.4 to 1:10, or 1:0.5 to 1:10.

In another specific example, the composition may include the first compound and the second compound in a weight ratio of 1:0.1 to 1:9, 1:0.1 to 1:8, 1:0.1 to 1:7, 1:0.1: to 1:6 , 1: 0.1 to 1: 5, 1: 0.1 to 1: 4, 1: 0.1 to 1: 3 or 1: 0.1 to 1: 2.

For example, the composition may include the first compound and the second compound in a weight ratio of 1:0.5 to 1:2.

In an embodiment, the composition may include the first compound and the second compound in a weight ratio of 1:0.5, 1:0.75, 1:1, 1:1.5 or 1:2.

When the mixing ratio of the first compound and the second compound is as described above, improvement of resistance increase suppression and output characteristics may be maximized.

The composition may be included in an amount of 0.2 to 8 parts by weight, for example, 0.5 to 8 parts by weight, 0.5 to 6 parts by weight, 0.5 to 5 parts by weight, or 0.5 to 3 parts by weight, based on 100 parts by weight of the electrolyte for the rechargeable lithium battery.

When the content of the composition and the content of each component in the composition are within the above ranges, a rechargeable lithium battery having improved resistance characteristics during high-temperature storage and improved cycle-life characteristics at room temperature and high temperature may be implemented.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate

(EC), propylene carbonate (PC), butylene carbonate (BC), and the like. The ester-based solvent may be methyl acetate, ethyl acetate, n-propyl acetate, t-butyl acetate, methyl propionate, ethyl propionate, propyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. In addition, the ketone-based solvent may be cyclohexanone, and the like. The alcohol-based solvent may include ethanol, isopropyl alcohol, and the like, and the aprotic solvent may include nitriles such as $R^{18}$-CN (wherein $R^{18}$ is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

The carbonate-based solvent is prepared by mixing a cyclic carbonate and a chain carbonate. When the cyclic carbonate and chain carbonate are mixed together in a volume ratio of 1:9 to 9:1, a performance of the electrolyte may be improved.

In particular, in an embodiment, the non-aqueous organic solvent may include the cyclic carbonate and the chain carbonate in a volume ratio of 2:8 to 5:5, and as a specific example, the cyclic carbonate and the chain carbonate may be included in a volume ratio of 2:8 to 4:6.

More specifically, the cyclic carbonate and the chain carbonate may be included in a volume ratio of 2:8 to 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 5.

[Chemical Formula 5]

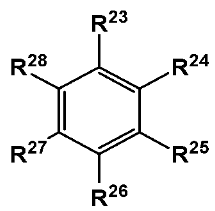

In Chemical Formula 5, $R^{23}$ to $R^{28}$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, vinyl ethylene carbonate, or an ethylene carbonate-based compound represented by Chemical Formula 6 as an additive to improve cycle-life of a battery.

[Chemical Formula 6]

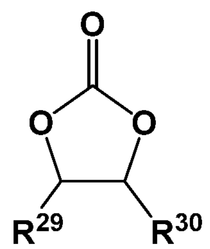

In Chemical Formula 6, $R^{29}$ and $R^{30}$ are the same or different, and are selected from hydrogen, a halogen, a cyano group (CN), a nitro group ($NO_2$), and a fluorinated C1 to C5 alkyl group, provided that at least one of $R^{29}$ and $R^{30}$ is selected from a halogen, a cyano group (CN), a nitro group ($NO_2$), and a fluorinated C1 to C5 alkyl group, and both $R^{29}$ and $R^{30}$ are not hydrogen.

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. When such an additive for improving cycle-life is further used, its amount may be appropriately adjusted.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wherein x and y are natural numbers, for example an integer of 1 to 20), LiCl, LiI, $LiB(C_2O_4)_2$ (lithium bis(oxalato) borate: LiBOB), LiDFOB (lithium difluoro(oxalato)borate), and $Li[PF_2(C_2O_4)_2]$ (lithium difluoro (bis oxalato) phosphate). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer on the positive electrode current collector, and the positive electrode active material layer includes a positive electrode active material.
The positive electrode active material may include lithiated intercalation compounds that reversibly intercalate and deintercalate lithium ions.

Specifically, at least one of a composite oxide of a metal selected from cobalt, manganese, nickel, and a combinationsthereof and lithium may be used.

Of course, the composite oxide in which a portion of the metal is substituted with a metal other than another metal may be used, and a phosphate compound of the composite oxide, for example, at least one selected $LiFePO_4$, $LiCoPO_4$, and $LiMnPO_4$ may be used. The lithium composite oxide may have a coating layer on the surface, or the lithium composite oxide may be mixed with another composite oxide having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, and thus a detailed description thereof is omitted.

The positive electrode active material may be, for example, at least one of lithium composite oxides represented by Chemical Formula 7.

[Chemical Formula 7] $Li_xM^1_yM^2_zM^3_{1-y-z}O_{2a}X_a$

In Chemical Formula 7,
$0.5 \le x \le 1.8$, $0 \le a \le 0.05$, $0 < y \le 1$, $0 \le z \le 1$, $0 \le y+z \le 1$, $M^1$, $M^2$, and $M^3$ each independently include at least one element selected from a metal such as Ni, Co, Mn, Al, B, Ba, Ca, Ce, Cr, Fe, Mo, Nb, Si, Sr, Mg, Ti, V, W, Zr, or La, and a combination thereof, and X include at least one element selected from F, S, P, or Cl.

In an embodiment, the positive electrode active material may be at least one selected from $LiCoO_2$, $LiNiO_2$, $LiMnO_2$, $LiMn_2O_4$, $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1).

In Chemical Formula 7, $0.8 \le y \le 1$, $0 \le z \le 0.2$, and $M^1$ may be Ni.

For example, the positive electrode active material selected from $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1) may be high nickel (high Ni)-based positive electrode active material.

For example, the positive electrode active material selected from $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1) may be a high Ni-based positive electrode active material.

For example, in the case of $LiNi_eCo_fAl_gO_2$ (e+f+g=1), the nickel content may be greater than or equal to 60% ($e \ge 0.6$), and more specifically, greater than or equal to 80% ($e \ge 0.8$).

A content of the positive electrode active material may be 90 wt% to 98 wt% based on the total weight of the positive electrode active material layer.

In an embodiment of the present invention, the positive electrode active material layer may optionally include a conductive material and a binder. In this case, a content of the conductive material and the binder may be 1 wt% to 5 wt%, respectively, based on the total weight of the positive electrode active material layer.

The conductive material is included to impart conductivity to the positive electrode and any electrically conductive material may be used as a conductive material unless it causes a chemical change in the configured battery. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery and examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, $SiO_x$ ($0 < x < 2$), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, $SnO_2$, a Sn-$R^{61}$ alloy (wherein $R^{61}$ is an element selected from an alkali metal, an alkaline-earth metal, a Group 13 element, a Group 14 element, a Group 15 element, a Group 16 element, a transition metal, a rare earth element, and a combination thereof, but not Sn), and the like. At least one of these materials may be mixed with $SiO_2$.

The elements Q and $R^{61}$ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a specific embodiment, the negative electrode active material may be graphite or may include a Si composite and graphite together.

When the negative electrode active material includes the Si composite and graphite together, the Si composite and graphite may be included in the form of a mixture, and the Si composite and graphite may be included in a weight ratio of 1:99 to 50:50. More specifically, the Si composite and graphite may be included in a weight ratio of 3: 97 to 20: 80 or 5: 95 to 20: 80.

The Si composite may include a core including Si-based particles and an amorphous carbon coating layer. For example, the Si-based particles may include at least one of a Si-C composite, SiOx ($0 < x \leq 2$), and a Si alloy. For example, the Si-C composite may include a core including Si particles and crystalline carbon, and an amorphous carbon coating layer on the surface of the core.

The crystalline carbon may include, for example, graphite, and more specifically, natural graphite, artificial graphite, or a mixture thereof.

An average particle diameter of the crystalline carbon may be 5 μm to 30 μm.

In the present specification, an average particle diameter may be a particle size (D50) at a volume ratio of 50% in a cumulative size-distribution curve.

In the Si-C composite, an average particle diameter of the Si particles may be 50 nm to 200 nm.

When the average particle diameter of the Si particles is within the above ranges, volume expansion occurring during charging and discharging may be suppressed, and interruption of a conductive path due to particle crushing during charging and discharging may be prevented.

The Si particles may be included in an amount of 1 wt% to 60 wt%, for example, 3 wt% to 60 wt%, based on the total weight of the Si-C composite.

The amorphous carbon may include soft carbon, hard carbon, a mesophase pitch carbonized product, calcined coke, or a mixture thereof.

The amorphous carbon may be included in an amount of 1 to 50 parts by weight, for example, 5 to 50 parts by

weight, or 10 to 50 parts by weight based on 100 parts by weight of the crystalline carbon.

In the negative electrode active material layer, the negative electrode active material may be included in an amount of 95 wt% to 99 wt% based on the total weight of the negative electrode active material layer.

In an embodiment, the negative electrode active material layer may include a binder, and optionally a conductive material. The content of the binder in the negative electrode active material layer may be 1 wt% to 5 wt% based on the total weight of the negative electrode active material layer. In addition, when the conductive material is further included, 90 wt% to 98 wt% of the negative electrode active material, 1 wt% to 5 wt% of the binder, and 1 wt% to 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 to 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

## DETAILED DESCRIPTION OF THE EMBODIMENTS

Hereinafter, examples of the present invention and comparative examples are described. These examples, however, are not in any sense to be interpreted as limiting the scope of the invention.

### Manufacture of Rechargeable Lithium Battery Cells

### Comparative Example 1

$LiNi_{0.88}Co_{0.07}Al_{0.05}O_2$ as a positive electrode active material, polyvinylidene fluoride as a binder, and ketjen black as a conductive material were mixed in a weight ratio of 97:2:1 and then, dispersed in N-methyl pyrrolidone,

preparing positive electrode active material slurry.

The positive electrode active material slurry was coated on a 14 μm-thick Al foil, dried at 110 °C, and pressed, manufacturing a positive electrode.

A negative electrode active material prepared by mixing artificial graphite and an Si-C composite in a weight ratio of 93:7, a styrene-butadiene rubber binder as a binder, and carboxylmethyl cellulose as a thickener were mixed in a weight ratio of 97:1:2 and then, dispersed in distilled water, preparing negative electrode active material slurry.

The Si-C composite included a core including artificial graphite and silicon particles and coal-based pitch coated on the surface of the core.

The negative electrode active material slurry was coated on a 10 μm-thick Cu and then, dried at 100 °C and pressed, manufacturing a negative electrode.

The positive electrode and the negative electrode were assembled with a 25 μm-thick polyethylene separator to manufacture an electrode assembly, and an electrolyte was injected thereinto, manufacturing a rechargeable lithium battery cell.

The electrolyte had a composition as follows.

(Composition of the electrolyte)

Salt: 1.5 M $LiPF_6$
Solvent: ethylene carbonate: ethylmethyl carbonate: dimethyl carbonate (EC: EMC:DMC= a volume ratio of 20:10:70)

## Comparative Example 2

A rechargeable lithium battery cell was manufactured in the same manner as in Comparative Example 1, except that 0.5 parts by weight of cesium hexafluorophosphate was added to the electrolyte.

(However, in the composition of the electrolyte, "parts by weight" means a relative weight of additives based on 100 weight of the total electrolyte (lithium salt + non-aqueous organic solvent).)

## Comparative Example 3

A rechargeable lithium battery cell was manufactured in the same manner as in Comparative Example 1, except that 0.5 parts by weight of the second compound represented by Chemical Formula 2-a was added to the electrolyte.

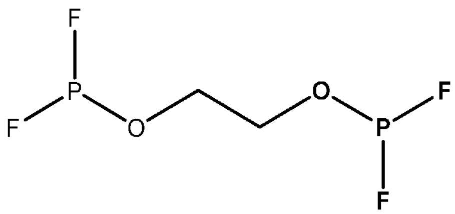

2-a

## Comparative Example 4

A rechargeable lithium battery cell was manufactured in the same manner as in Comparative Example 1, except that 0.5 parts by weight of the second compound represented by Chemical Formula 2-b was added to the electrolyte.

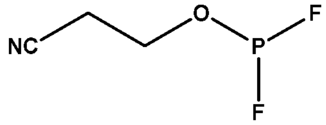

2-b

**Comparative Example 5**

A rechargeable lithium battery cell was manufactured in the same manner as in Comparative Example 1, except that 0.5 parts by weight of the second compound represented by Chemical Formula 2-c was added to the electrolyte.

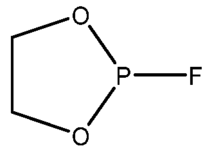

2-c

**Comparative Example 6**

A rechargeable lithium battery cell was manufactured in the same manner as in Comparative Example 1, except that 0.75 parts by weight of the second compound represented by Chemical Formula 2-d was added to the electrolyte.

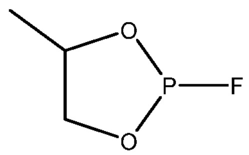

2-d

**Comparative Example 7**

A rechargeable lithium battery cell was manufactured in the same manner as in Comparative Example 1, except that 0.5 parts by weight of the second compound represented by Chemical Formula 2-e was added to the electrolyte.

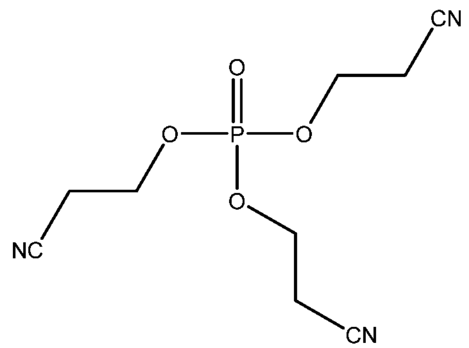

2-e

**Comparative Example 8**

A rechargeable lithium battery cell was manufactured in the same manner as in Comparative Example 1, except that 0. 5 parts by weight of the second compound represented by Chemical Formula 2-f was added to the electrolyte.

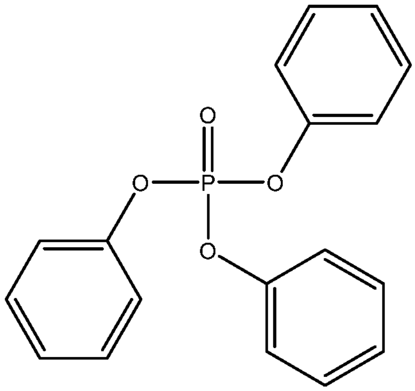

2-f

**Example 1**

A rechargeable lithium battery cell was manufactured in the same manner as in Comparative Example 1, except that a composition including 0.5 parts by weight of cesium hexafluorophosphate and 0.5 parts by weight of the second compound represented by Chemical Formula 2-a was added to the electrolyte.

**Examples 2 to 24**

Rechargeable lithium battery cells were manufactured in the same manner as in Example 1, except for changing the compositions shown in Table 1.

Compositions according to Examples and Comparative Examples are shown in Table 1.

(Table 1)

| | Additive composition | |
|---|---|---|
| | First compound (parts by weight) | Second compound (parts by weight) |
| Comparative Example 1 | - | - |
| Comparative Example 2 | $CsPF_6$ (0.5) | - |
| Comparative Example 3 | - | Chemical Formula 2-a (0.5) |
| Comparative Example 4 | - | Chemical Formula 2-b (0.5) |
| Comparative Example 5 | - | Chemical Formula 2-c (0.5) |
| Comparative Example 6 | - | Chemical Formula 2-d (0.75) |
| Comparative Example 7 | - | Chemical Formula 2-e (0.5) |
| Comparative Example 8 | - | Chemical Formula 2-f (0.5) |
| Example 1 | $CsPF_6$ (0.5) | Chemical Formula 2-a (0.5) |
| Example 2 | $CsPF_6$ (1.0) | Chemical Formula 2-a (0.5) |
| Example 3 | $CsPF_6$ (0.5) | Chemical Formula 2-a (1.0) |
| Example 4 | $CsPF_6$ (1.0) | Chemical Formula 2-a (1.0) |
| Example 5 | $CsPF_6$ (0.5) | Chemical Formula 2-b (0.5) |
| Example 6 | $CsPF_6$ (1.0) | Chemical Formula 2-b (0.5) |
| Example 7 | $CsPF_6$ (0.5) | Chemical Formula 2-b (1.0) |
| Example 8 | $CsPF_6$ (1.0) | Chemical Formula 2-b (1.0) |
| Example 9 | $CsPF_6$ (0.5) | Chemical Formula 2-c (0.5) |
| Example 10 | $CsPF_6$ (1.0) | Chemical Formula 2-c (0.5) |

(continued)

| | Additive composition | |
|---|---|---|
| | First compound (parts by weight) | Second compound (parts by weight) |
| Example 11 | $CsPF_6$ (0.5) | Chemical Formula 2-c (1.0) |
| Example 12 | $CsPF_6$ (1.0) | Chemical Formula 2-c (1.0) |
| Example 13 | $CsPF_6$ (0.5) | Chemical Formula 2-d (0.75) |
| Example 14 | $CsPF_6$ (1.0) | Chemical Formula 2-d (0.75) |
| Example 15 | $CsPF_6$ (0.5) | Chemical Formula 2-d (1.0) |
| Example 16 | $CsPF_6$ (1.0) | Chemical Formula 2-d (1.0) |
| Example 17 | $CsPF_6$ (0.5) | Chemical Formula 2-e (0.5) |
| Example 18 | $CsPF_6$ (1.0) | Chemical Formula 2-e (0.5) |
| Example 19 | $CsPF_6$ (0.5) | Chemical Formula 2-e (1.0) |
| Example 20 | $CsPF_6$ (1.0) | Chemical Formula 2-e (1.0) |
| Example 21 | $CsPF_6$ (0.5) | Chemical Formula 2-f (0.5) |
| Example 22 | $CsPF_6$ (1.0) | Chemical Formula 2-f (0.5) |
| Example 23 | $CsPF_6$ (0.5) | Chemical Formula 2-f (1.0) |
| Example 24 | $CsPF_6$ (1.0) | Chemical Formula 2-f (1.0) |

**Evaluation 1: Evaluation of DC Resistance Increase Rate after High-temperature Storage**

The rechargeable lithium battery cells according to Examples 1 to 24 and Comparative Examples 1 to 8 were measured with respect to initial DC resistance (DCIR) as $\triangle V/\triangle I$ (change in voltage / change in current), and after changing a maximum energy state inside the battery cells into a full charge state (SOC 100%) and storing the cells in this state at a high temperature (60 °C) for 30 days, the cells was measured with respect to DC resistance to calculate a DCIR increase rate (%) according to Equation 1, and the results are shown in Table 2 to Table 7.

[Equation 1]

$$\text{DCIR increase rate} = \{(\text{DCIR after 30 days} - \text{Initial DCIR}) / \text{Initial DCIR}\} \times 100\ (\%)$$

**Evaluation 2: Evaluation of Room-temperature Cycle-life Characteristics**

The rechargeable lithium battery cells according to Examples 1 to 24, and Comparative Examples 1 to 8 were once charged and discharged at 0.2 C and measured with respect to charge and discharge capacity (initial capacity).

The rechargeable lithium battery cells according to Examples 1 to 24 and Comparative Examples 1 to 8 were measured with respect to a change in discharge capacity, while 100 cycles charged and discharged at a C-rate of 0.5 C within 2.75 V to 4.2 V at room temperature (25° C) to calculate discharge capacity at the 100 cycles to the initial capacity (capacity retention rate), which was provided as capacity retention rate (%, retention) in Tables 2 to 7.

In addition, the cells were recharged at 0.2 C to 4.2 V under a constant current, cut off at 0.05 C under a constant voltage condition, and discharged at 0.2 C to 3.0 V under a constant current condition and then, measured with respect to discharge capacity. Herein, charge and discharge characteristics at this this time is called to be recovery characteristics. Charge and discharge capacities at this time were measured to calculate a ratio of discharge capacity to the initial capacity, which is provided as capacity recovery rate (%, recovery) in Tables 2 to 7.

(Table 2)

| | Initial DC resistance(mΩ) | DC resistance increase rate after high-temperature (60 °C) storage (%) | Capacity retention rate (%, retention) | Capacity recovery rate (%, recovery) |
|---|---|---|---|---|
| Comparative Example 1 | 35.0 | 15.7 | 84.2 | 95.0 |
| Comparative Example 2 | 31.2 | 4.8 | 86.0 | 96.8 |
| Comparative Example 3 | 35.8 | 4.2 | 84.9 | 96.9 |
| Example 1 | 31.5 | 4.0 | 86.5 | 97.2 |
| Example 2 | 30.2 | 3.8 | 86.7 | 97.7 |
| Example 3 | 33.0 | 3.5 | 86.6 | 98.0 |
| Example 4 | 30.7 | 2.8 | 87.5 | 98.5 |

(Table 3)

| | Initial DC resistance (mΩ) | DC resistance increase rate after high-temperature (60 °C) storage (%) | Capacity retention rate (%, retention) | Capacity recovery rate (%, recovery) |
|---|---|---|---|---|
| Comparative Example 1 | 35.0 | 15.7 | 84.2 | 95.0 |
| Comparative Example 2 | 31.2 | 4.8 | 86.0 | 96.8 |
| Comparative Example 4 | 34.2 | 4.8 | 84.0 | 96.2 |
| Example 5 | 30.1 | 4.5 | 85.8 | 96.8 |
| Example 6 | 29.5 | 4.2 | 86.1 | 97.0 |
| Example 7 | 32.1 | 3.8 | 86.2 | 97.1 |
| Example 8 | 29.3 | 3.0 | 86.6 | 97.7 |

(Table 4)

| | Initial DC resistance (mΩ) | DC resistance increase rate after high-temperature (60 °C) storage (%) | Capacity retention rate (%, retention) | Capacity recovery rate (%, recovery) |
|---|---|---|---|---|
| Comparative Example 1 | 35.0 | 15.7 | 84.2 | 95.0 |
| Comparative Example 2 | 31.2 | 4.8 | 86.0 | 96.8 |
| Comparative Example 5 | 33.5 | 4.5 | 84.2 | 96.3 |
| Example 9 | 29.8 | 4.3 | 86.0 | 96.9 |
| Example 10 | 29.4 | 4.1 | 86.1 | 97.2 |
| Example 11 | 31.0 | 3.5 | 86.5 | 97.3 |
| Example 12 | 28.9 | 2.9 | 87.0 | 97.8 |

(Table 5)

| | Initial DC resistance (mΩ) | DC resistance increase rate after high-temperature (60 °C) storage (%) | Capacity retention rate (%, retention) | Capacity recovery rate (%, recovery) |
|---|---|---|---|---|
| Comparative Example 1 | 35.0 | 15.7 | 84.2 | 95.0 |
| Comparative Example 2 | 31.2 | 4.8 | 86.0 | 96.8 |
| Comparative Example 6 | 32.1 | 4.2 | 85.2 | 96.9 |
| Example 13 | 28.9 | 3.8 | 86.8 | 97.3 |
| Example 14 | 28.1 | 3.5 | 87.0 | 97.8 |
| Example 15 | 28.5 | 2.9 | 86.9 | 98.2 |
| Example 16 | 27.8 | 2.1 | 87.9 | 98.9 |

(Table 6)

| | Initial DC resistance (mΩ) | DC resistance increase rate after high-temperature (60 °C) storage (%) | Capacity retention rate (%, retention) | Capacity recovery rate (%, recovery) |
|---|---|---|---|---|
| Comparative Example 1 | 35.0 | 15.7 | 84.2 | 95.0 |
| Comparative | 31.2 | 4.8 | 86.0 | 96.8 |
| Example 2 | | | | |
| Comparative Example 7 | 34.8 | 4.5 | 84.8 | 95.8 |
| Example 17 | 32.1 | 4.2 | 86.4 | 96.2 |
| Example 18 | 31.2 | 4.0 | 86.5 | 97.1 |
| Example 19 | 32.8 | 3.7 | 86.7 | 97.2 |
| Example 20 | 31.5 | 3.1 | 87.8 | 97.8 |

(Table 7)

| | Initial DC resistance (mΩ) | DC resistance increase rate after high-temperature (60 °C) storage (%) | Capacity retention rate (%, retention) | Capacity recovery rate (%, recovery) |
|---|---|---|---|---|
| Comparative Example 1 | 35.0 | 15.7 | 84.2 | 95.0 |
| Comparative Example 2 | 31.2 | 4.8 | 86.0 | 96.8 |
| Comparative Example 8 | 35.2 | 4.9 | 84.1 | 96.0 |
| Example 21 | 32.1 | 4.5 | 86.5 | 97.1 |
| Example 22 | 31.8 | 4.3 | 86.8 | 97.5 |
| Example 23 | 33.9 | 3.8 | 86.1 | 98.0 |

(continued)

| | Initial DC resistance (mΩ) | DC resistance increase rate after high-temperature (60 °C) storage (%) | Capacity retention rate (%, retention) | Capacity recovery rate (%, recovery) |
|---|---|---|---|---|
| Example 24 | 33.0 | 3.7 | 86.2 | 98.2 |

Referring to Tables 2 to 7, the rechargeable lithium battery cells using a composition of a specific mixed combination according to the present example embodiment were not only suppressed from a resistance increase during the high temperature storage but also realized excellent cycle-life characteristics.

In particular, when the second compound represented by Chemical Formula 1 or 2 was included in the composition, the DC resistance increase rate was improved, compared with when the second compound was not included. While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

**1.** An electrolyte for a rechargeable lithium battery, comprising

a non-aqueous organic solvent,
a lithium salt, and
an additive,
wherein the additive is a composition including a first compound and a second compound,
the first compound is a cesium salt compound, and
the second compound is represented by Chemical Formula 1 or Chemical Formula 2:

[Chemical Formula 1]

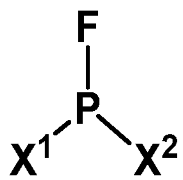

wherein, in Chemical Formula 1,

$X^1$ and $X^2$ are each independently a halogen, or $-O-L^1-R^1$,
at least one of $X^1$ to $X^2$ is $-O-L^1-R^1$,
wherein $L^1$ is a single bond or a substituted or unsubstituted C1 to C10 alkylene group, and
R's are each independently a cyano group (-CN), a difluorophosphite group ($-OPF_2$), a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and
when $X^1$ and $X^2$ are simultaneously $-O-L^1-R^1$,
R's are each independently present, or
two R's are linked to form a substituted or unsubstituted monocyclic or polycyclic aliphatic heterocycle or a substituted or unsubstituted monocyclic or polycyclic aromatic heterocycle; and

[Chemical Formula 2]

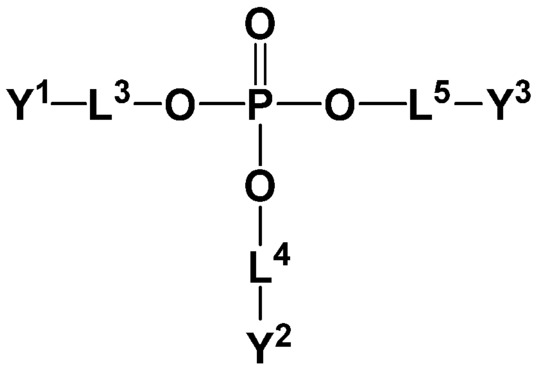

wherein, in Chemical Formula 2,

$L^3$ to $L^5$ are each independently be a single bond, a substituted or unsubstituted C1 to C10 alkylene group or a substituted or unsubstituted C6 to C30 arylene group, and
$Y^1$ to $Y^3$ are each independently be a cyano group (-CN), a substituted or unsubstituted C6 to C30 aryl group or a substituted or unsubstituted C2 to C30 heterocyclic group.

**2.** The electrolyte for the rechargeable lithium battery of claim 1, wherein
an anion of the cesium salt compound is an imide-based anion or a phosphate-based anion.

**3.** The electrolyte for the rechargeable lithium battery of claim 1, wherein
the cesium salt compound is represented by Chemical Formula 3 or Chemical Formula 4:

[Chemical Formula 3] [Chemical Formula 4]

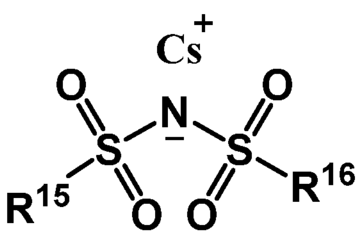

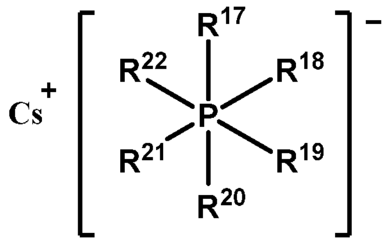

wherein, in Chemical Formula 3 and Chemical Formula 4,
$R^{15}$ to $R^{22}$ are each independently a fluoro group or a C1 to C4 fluoroalkyl group substituted with at least one fluoro group.

**4.** The electrolyte for the rechargeable lithium battery of claim 3, wherein
Chemical Formula 3 is represented by Chemical Formula 3-1 or Chemical Formula 3-2:

[Chemical Formula 3-1] [Chemical Formula 3-2]

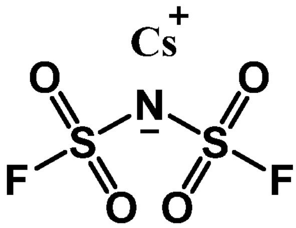 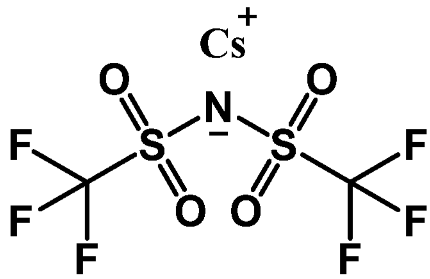.

**5.** The electrolyte for the rechargeable lithium battery of claim 1, wherein Chemical Formula 4 is represented by Chemical Formula 4-1:

[Chemical Formula 4-1]

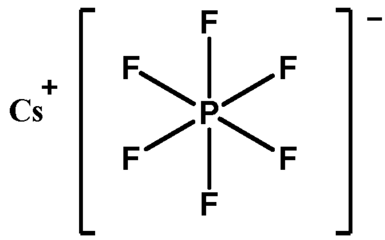.

**6.** The electrolyte for the rechargeable lithium battery of claim 1, wherein the first compound is included in an amount of 0.05 to 3.0 parts by weight based on 100 parts by weight of the electrolyte for the rechargeable lithium battery.

**7.** The electrolyte for the rechargeable lithium battery of claim 1, wherein

one of $X^1$ and $X^2$ in Chemical Formula 1 is a fluoro group, and the other is $-O-L^1-R^1$,
wherein $L^1$ is a single bond or a substituted or unsubstituted C1 to C10 alkylene group, and
$R^1$ is a cyano group (-CN) or a difluorophosphite group ($-OPF_2$).

**8.** The electrolyte for the rechargeable lithium battery of claim 1, wherein the second compound is represented by Chemical Formula 1-1:

[Chemical Formula 1-1]

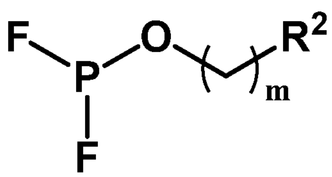

wherein, in Chemical Formula 1-1,

m is one of integers 1 to 5, and
$R^2$ is a cyano group (-CN) or a difluorophosphite group ($-OPF_2$).

**9.** The electrolyte for the rechargeable lithium battery of claim 1, wherein

each of $X^1$ and $X^2$ in Chemical Formula 1 are $-O-L^1-R^1$, and
two L's are each independently a single bond or a substituted or unsubstituted C1 to C10 alkylene group, and
two $R^1$s are each independently a substituted or unsubstituted C1 to C10 alkyl group, or two R's are linked to

form a substituted or unsubstituted monocyclic aliphatic heterocycle or polycyclic aliphatic heterocycle.

**10.** The electrolyte for the rechargeable lithium battery of claim 1, wherein the second compound is represented by Chemical Formula 1-2:

[Chemical Formula 1-2]

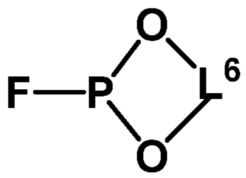

wherein, in Chemical Formula 1-2,
$L^6$ is a substituted or unsubstituted C2 to C5 alkylene group.

**11.** The electrolyte for the rechargeable lithium battery of claim 10, wherein Chemical Formula 1-2 is represented by Chemical Formula 1-2a or Chemical Formula 1-2b:

[Chemical Formula 1-2a] [Chemical Formula 1-2b]

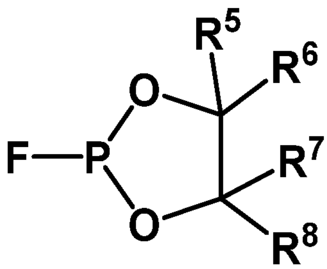
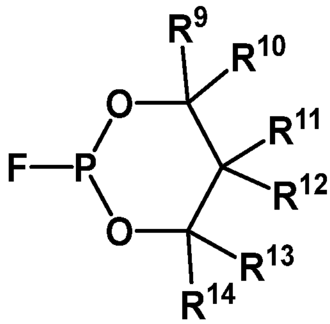

wherein, in Chemical Formula 1-2a and Chemical Formula 1-2b,
$R^5$ to $R^{14}$ are each independently hydrogen, a halogen group, or a substituted or unsubstituted C1 to C5 alkyl group.

**12.** The electrolyte for the rechargeable lithium battery of claim 1, wherein $L^3$ to $L^5$ in Chemical Formula 2 are each independently a single bond or a substituted or unsubstituted C1 to C10 alkylene group.

**13.** The electrolyte for the rechargeable lithium battery of claim 1, wherein $Y^1$ to $Y^3$ in Chemical Formula 2 are each independently a cyano group (-CN) or a substituted or unsubstituted C6 to C30 aryl group.

**14.** The electrolyte for the rechargeable lithium battery of claim 1, wherein the second compound is any one selected from the compounds listed in Group 1:

[Group 1]

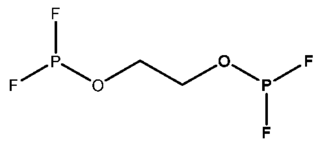

2-a

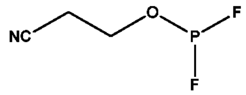

2-b

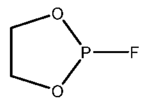

2-c

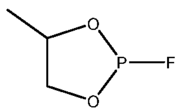

2-d

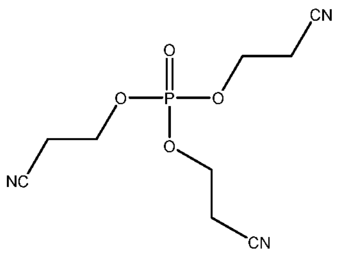

2-e

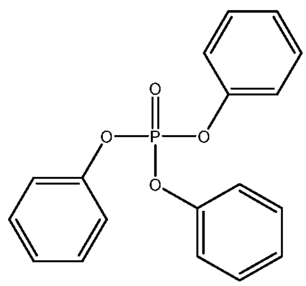

2-f

.

**15.** The electrolyte for the rechargeable lithium battery of claim 1, wherein the second compound is included in an amount of 0.1 to 5.0 parts by weight based on 100 parts by weight of the electrolyte for the rechargeable lithium battery.

**16.** The electrolyte for the rechargeable lithium battery of claim 1, wherein the composition includes the first compound and the second compound in a weight ratio of 1:0.1 to 1:10.

**17.** The electrolyte for the rechargeable lithium battery of claim 1, wherein the composition includes the first compound and the second compound in a weight ratio of 1:0.5 to 1:2.

**18.** The electrolyte for the rechargeable lithium battery of claim 1, wherein the composition is included in an amount of 0.2 to 8 parts by weight based on 100 parts by weight of the electrolyte for the rechargeable lithium battery.

**19.** A rechargeable lithium battery, comprising

a positive electrode including a positive electrode active material;
a negative electrode including a negative electrode active material; and
the electrolyte for the rechargeable lithium battery of any one of claim 1 to claim 18.

**20.** The rechargeable lithium battery of claim 19, wherein the positive electrode active material is represented by Chemical Formula 7:

[Chemical Formula 7] $Li_xM1_yM2_zM^3_{1-y-z}O_{2-a}X_a$

wherein, in Chemical Formula 7,
$0.5 \leq x \leq 1.8$, $0 \leq a \leq 0.05$, $0 < y \leq 1$, $0 \leq z \leq 1$, $0 \leq y+z \leq 1$, $M^1$, $M^2$, and $M^3$ each independently include at least one element selected from a metal of Ni, Co, Mn, Al, B, Ba, Ca, Ce, Cr, Fe, Mo, Nb, Si, Sr, Mg, Ti, V, W, Zr, or La, and a combination thereof, and X include at least one element selected from F, S, P, or Cl.

**21.** The rechargeable lithium battery of claim 20, wherein
in Chemical Formula 7,
$0.8 \leq y \leq 1$, $0 \leq z \leq 0.2$, and $M^1$ are Ni.

**22.** The rechargeable lithium battery of claim 19, wherein
the negative electrode active material is graphite or includes a Si composite and graphite together.

**23.** The rechargeable lithium battery of claim 22, wherein
the Si composite includes a core including Si-based particles and an amorphous carbon coating layer.

**24.** The rechargeable lithium battery of claim 23, wherein
the Si-based particles include one or more of a Si-C composite, $SiO_x$ ($0 < x \leq 2$), and a Si alloy.

**25.** The rechargeable lithium battery of claim 24, wherein

the Si-C composite includes a core including Si particles and crystalline carbon and an amorphous carbon coating layer on the surface of the core, and
an average particle diameter of the Si particles is 50 nm to 200 nm.

【Figure 1】

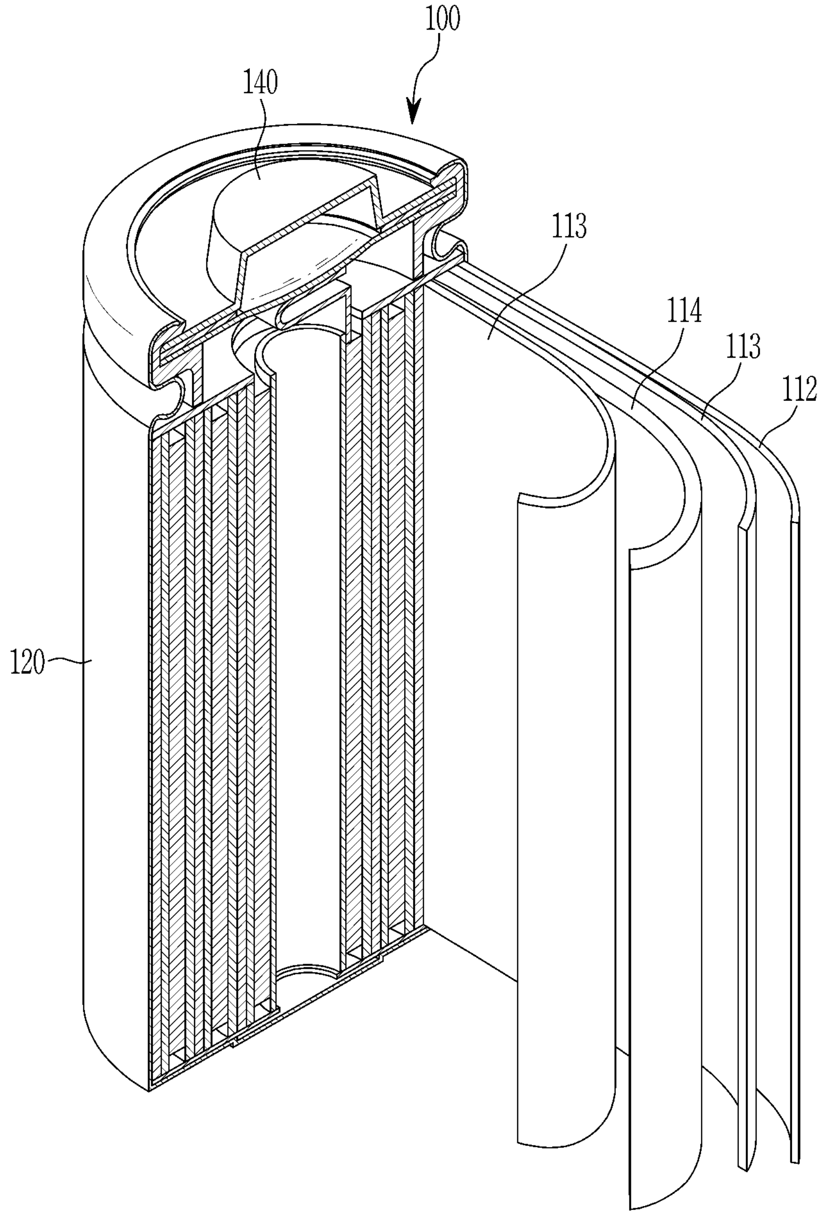

## INTERNATIONAL SEARCH REPORT

International application No.
**PCT/KR2022/004547**

**A. CLASSIFICATION OF SUBJECT MATTER**

**H01M 10/0567**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 전해액 (electrolyte solution), 첨가제(additive), 세슘염 화합물(cesium salt compound), 포스파이트계 화합물(phosphite-based compound), 포스페이트계 화합물(phosphate-based compound)

**C. DOCUMENTS CONSIDERED TO BE RELEVANT**

| Category* | Citation of document, with indication, where appropriate, of the relevant passages | Relevant to claim No. |
|---|---|---|
| Y | US 2020-0212486 A1 (BATTELLE MEMORIAL INSTITUTE) 02 July 2020 (2020-07-02) See claims 1, 8 and 17; and paragraphs [0073], [0074], [0079], [0090] and [0091]. | 1-25 |
| Y | KR 10-2018-0036340 A (SAMSUNG SDI CO., LTD.) 09 April 2018 (2018-04-09) See claims 1-5 and 8-10; and paragraphs [0030], [0033], [0069]-[0073] and [0081]-[0084]. | 1-8,14-25 |
| Y | KR 10-2017-0018739 A (SAMSUNG SDI CO., LTD.) 20 February 2017 (2017-02-20) See claims 1, 5, 6-8 and 11; and paragraphs [0054], [0066], [0083] and [0087]. | 1-6,9-11,14-25 |
| Y | US 2016-0336615 A1 (EAGLEPICHER TECHNOLOGIES, LLC) 17 November 2016 (2016-11-17) See claims 1, 3, 7, 8, 10 and 11; paragraphs [0013], [0064], [0072] and [0075]; and table 1. | 1-6,12-25 |
| Y | KR 10-2192087 B1 (SAMSUNG ELECTRONICS CO., LTD.) 16 December 2020 (2020-12-16) See claims 1 and 17; and paragraphs [0028] and [0094]. | 23-25 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 July 2022** | **07 July 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/004547**

| Patent document cited in search report | Publication date (day/month/year) | Patent family member(s) | Publication date (day/month/year) |
|---|---|---|---|
| US 2020-0212486 A1 | 02 July 2020 | WO 2020-139602 A1 | 02 July 2020 |
| KR 10-2018-0036340 A | 09 April 2018 | CN 109792085 A | 21 May 2019 |
| | | CN 109792085 B | 24 September 2021 |
| | | EP 3522287 A1 | 07 August 2019 |
| | | KR 10-2163999 B1 | 12 October 2020 |
| | | US 10916806 B2 | 09 February 2021 |
| | | US 10985404 B2 | 20 April 2021 |
| | | US 11038203 B2 | 15 June 2021 |
| | | US 11038204 B2 | 15 June 2021 |
| | | US 11056719 B2 | 06 July 2021 |
| | | US 11056720 B2 | 06 July 2021 |
| | | US 2019-0252724 A1 | 15 August 2019 |
| | | US 2020-0052333 A1 | 13 February 2020 |
| | | US 2020-0052334 A1 | 13 February 2020 |
| | | US 2020-0052335 A1 | 13 February 2020 |
| | | US 2020-0052336 A1 | 13 February 2020 |
| | | US 2020-0052337 A1 | 13 February 2020 |
| | | US 2021-0005932 A1 | 07 January 2021 |
| | | WO 2018-062719 A1 | 05 April 2018 |
| KR 10-2017-0018739 A | 20 February 2017 | None | |
| US 2016-0336615 A1 | 17 November 2016 | US 1050284 B2 | 29 June 2021 |
| | | WO 2016-182598 A1 | 17 November 2016 |
| KR 10-2192087 B1 | 16 December 2020 | KR 10-2015-0101310 A | 03 September 2015 |
| | | US 2015-0243969 A1 | 27 August 2015 |
| | | US 9548490 B2 | 17 January 2017 |

Form PCT/ISA/210 (patent family annex) (July 2019)